# FASCICULE DE BREVET EUROPEEN

(11) **EP 0 820 852 B1**
(45) Date de publication et mention de la délivrance du brevet: **23.04.2003**
(21) Numéro de dépôt: 97401532.3
(22) Date de dépôt: 01.07.1997
(51) Int. Cl.: B29C 59/12

(54) **Procédé et dispositif de commande du fonctionnement d'un système de traitement de surface d'un substrat solide en défilement**
Verfahren und Vorrichtung zum Steuern der Funktion eines Oberflächenbehandlungssystems für einen laufenden festen Substrat
Method and apparatus for controlling the functioning of a surface treatment system for a moving solid substrate

(30) Priorité: 23.07.1996 FR 9609233
(43) Date de publication de la demande: 28.01.1998
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Lagrange, Gilles, 91470 Forges Les Bains (FR); Hibon, Isabelle, 78150 Le Chesnay (FR)
(74) Mandataire: Vesin, Jacques

(56) Documents cités:
- EP-A- 0 010 632
- EP-A- 0 129 199
- EP-A- 0 248 274
- EP-A- 0 658 416
- US-A- 4 946 568
- PATENT ABSTRACTS OF JAPAN vol. 010, no. 098 (C-339), 15 avril 1986 & JP 60 228673 A (HITACHI SEISAKUSHO KK;OTHERS: 01), 13 novembre 1985,

## Description

La présente invention concerne un dispositif de commande du fonctionnement d'un système de traitement de surface d'un substrat solide en défilement, par décharge électrique à barrière diélectrique dans une atmosphère gazeuse contrôlée.

A titre illustratif, on peut citer les exemples d'application suivants : le traitement de films polymères d'emballage alimentaire, ou encore la fabrication de condensateurs.

On connaît déjà dans l'état de la technique, par exemple du document au nom de E. Prinz paru dans « Plastics Southern Africa » en Juin 1983, pages 50 et suivantes ainsi que du document US-A-4 946 568, des systèmes de traitement de surface de ce type, qui comportent un dispositif de traitement dans lequel défile le substrat à traiter, ce dispositif étant raccordé à des moyens d'alimentation de celui-ci en gaz, à des moyens d'alimentation de celui-ci en énergie électrique pour engendrer la décharge électrique et à des moyens d'aspiration de gaz.

De tels systèmes permettent de traiter des substrats pour améliorer leurs caractéristiques notamment d'adhésion, de mouillabilité et d'imperméabilité au gaz ou aux liquides, ce qui permet d'étendre leurs domaines d'applications.

C'est ainsi que l'on a déjà proposé dans le document EP-516 804 au nom de la Demanderesse, de réaliser un dépôt d'une couche mince d'oxyde de silicium liée à un substrat en un matériau polymère, qui comprend la soumission d'une surface du substrat à une décharge électrique à barrière diélectrique et l'exposition de cette surface à une atmosphère contenant un silane, grâce à quoi, il se forme un dépôt d'oxyde de silicium lié à la surface du substrat.

Les dispositifs de traitement pour la mise en oeuvre de ce type de procédés sont en général intégrés dans une ligne de production ou transformation en continu de tels substrats (visant par exemple à les imprimer, les laminer, ou encore les métalliser), et le réglage de ces dispositifs est réalisé à partir d'une recette préétablie en fonction notamment des caractéristiques de la ligne de transformation/production qui les intègre.

On conçoit cependant que ceci présente un certain nombre d'inconvénients, notamment au niveau de la reproductibilité de la qualité du substrat résultant du traitement, car il est extrêmement difficile d'adapter en permanence les paramètres de fonctionnement de ces dispositifs de traitement aux conditions de fonctionnement d'une telle ligne de transformation ou production.

Le but de l'invention est donc de résoudre ces problèmes.

A cet effet, l'invention a pour objet un dispositif de commandé du fonctionnement d'un système de traitement de surface d'un substrat solide en défilement, par décharge électrique à barrière diélectrique dans une atmosphère gazeuse contrôlée, système du type comportant un dispositif de traitement dans lequel défile un substrat à traiter, ce dispositif étant raccordé à des moyens d'alimentation de celui-ci en gaz, à des moyens d'alimentation de celui-ci en énergie électrique pour engendrer la décharge électrique, et à des moyens d'aspiration de gaz, se caractérisant en ce qu'il comporte une unité de traitement d'informations recevant en entrée, une information de vitesse de défilement du substrat dans le dispositif de traitement et raccordée en sortie, à des moyens de commande des moyens d'alimentation en gaz et à des moyens de commande des moyens d'alimentation en énergie électrique, pour réguler le débit de gaz délivré par les ou chacun des moyens d'alimentation en gaz et/ou la puissance électrique délivrée par les moyens d'alimentation en énergie électrique, au dispositif, en fonction de la vitesse de défilement du substrat dans le dispositif de traitement, afin d'obtenir un traitement de surface de qualité équivalente du substrat, quelle que soit la vitesse de défilement de celui-ci dans le dispositif de traitement.

Comme il apparaîtra clairement à l'homme du métier, la notion de « qualité » du traitement obtenu selon l'invention varie d'un produit à l'autre, d'un cite industriel à l'autre, par exemple en fonction des applications (encrage, métallisation, etc...) ou encore en fonction des spécifications requises par chaque site.

A titre illustratif, mais nullement limitatif, on citera ici les exemples suivants de mesures, pratiquées par tel ou tel site industriel pour évaluer la qualité et l'acceptabilité des pièces traitées :
- des mesures de tension de surface de films polymère traités;
- des mesures d'étalement (angle de mouillage) d'une goutte d'eau sur la surface traitée;
- l'évaluation en tension de surface d'encres précédemment calibrées par l'industriel;
- des tests d'adhésion d'encre par la méthode du scotch dont on mesure la force de traction avant décollement (test bien connu des métallurgistes);
- des tests de corrosion tel que celui pratiqué en appliquant une tension électrique sur la métallisation et en observant l'évolution de cette métallisation avec le temps (vieillissement).

On comprendra dès lors que la notion de qualité « équivalente » selon l'invention doit s'entendre selon les cas par exemple comme liée au résultat du ou des tests couramment pratiqués par chaque site utilisateur, donc au résultat du test pratiqué défini comme acceptable par le site utilisateur considéré. A titre illustratif, on peut donc citer une force de traction à la rupture du test du scotch, ou encore à titre de second exemple un angle de mouillage d'une goutte d'eau sur le support traité.

Avantageusement, l'unité de traitement d'informations est reliée en sortie à des moyens de commande du débit d'aspiration des moyens d'aspiration.

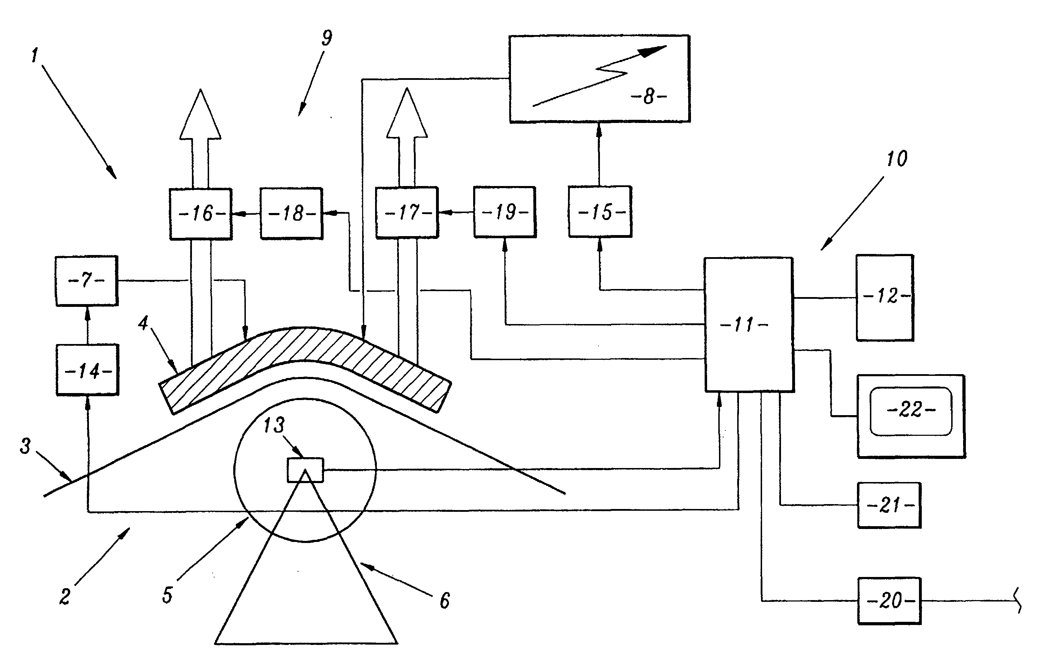

L'invention sera mieux comprise à la lecture de la description qui va suivre, donnée uniquement à titre d'exemple et faite en se référant au dessin annexé qui représente un schéma synoptique illustrant la structure et le fonctionnement d'un dispositif de commande selon l'invention.

On reconnaît en effet sur cette figure un dispositif de commande du fonctionnement d'un système de traitement de surface d'un substrat solide en défilement, par décharge électrique à barrière diélectrique dans une atmosphère gazeuse contrôlée.

Sur cette figure, le système est désigné par la référence générale 1 et comporte de façon générale, un dispositif de traitement de type approprié désigné par la référence générale 2, dans lequel défile le; substrat à traiter, ce substrat étant désigné par la référence générale 3 sur cette figure.

Ce substrat se présente par exemple sous la forme d'une bande de film à traiter défilant entre une partie fixe 4 du dispositif de traitement 2 et une partie mobile en rotation 5 de celui-ci, ce dispositif comportant également des moyens de support désignés par la référence générale 6 (on comprend que la partie 4 est fixe durant la phase de traitement, le système étant le plus souvent monté sur vérins permettant de le lever et l'abaisser durant d'autres phases).

Ce dispositif de traitement et plus particulièrement la partie fixe 4 de celui-ci, est raccordé à des moyens d'alimentation de celui-ci en gaz, désignés par la référence générale 7 sur cette figure, à des moyens d'alimentation de celui-ci en énergie électrique, désignés par la référence générale 8 sur cette figure, pour engendrer la décharge électrique dans le dispositif et à des moyens d'aspiration de gaz désignés de façon générale par la référence 9 sur cette figure.

Les différents moyens qui viennent d'être décrits peuvent présenter n'importe quelle structure appropriée, par exemple connue dans l'état de la technique, de sorte que l'on ne les décrira pas plus en détail par la suite.

Selon l'invention, le dispositif de commande comporte également une unité de traitement d'informations désignée par la référence générale 10 sur cette figure, comportant par exemple tout calculateur 11 approprié associé à des moyens de mémorisation 12, cette unité de traitement d'informations 10 recevant en entrée, une information de vitesse de défilement du substrat 3 dans le dispositif de traitement 2, cette information étant délivrée par exemple par un capteur de vitesse de rotation 13 associé à la partie mobile en rotation 5 du dispositif de traitement.

En sortie, cette unité de traitement d'informations 10 est reliée à des moyens 14 de commande des moyens d'alimentation en gaz 7 et à des moyens 15 de commande des moyens d'alimentation en énergie électrique 8, pour réguler le débit de gaz délivré par les ou chacun des moyens d'alimentation en gaz par exemple si ceux-ci comportent plusieurs sources de gaz, et/ou la puissance électrique délivrée par les moyens d'alimentation en énergie électrique, au dispositif, en fonction de la vitesse de défilement du substrat dans le dispositif de traitement, afin d'obtenir un traitement de surface de qualité équivalente du substrat quelle que soit la vitesse de défilement de celui-ci dans le dispositif de traitement.

Par ailleurs, et comme cela est représenté, les moyens d'aspiration de gaz désignés par la référence générale 9, peuvent comporter au moins des premiers moyens d'aspiration 16 disposés en entrée du dispositif de traitement et des seconds moyens d'aspiration 17 disposés en sortie du dispositif de traitement(entrée et sortie du dispositif de traitement devant être compris comme définis par rapport au sens de défilement des objets à traiter dans le dispositif), l'unité de traitement d'informations 10 étant alors reliée à des moyens de commande 18 et 19 respectivement, des débits d'aspiration des premiers et seconds moyens d'aspiration 16,17 respectivement, en fonction du débit d'alimentation en gaz du dispositif par les moyens d'alimentation 7 correspondants.

On notera également que l'atmosphère gazeuse contrôlée dans le dispositif de traitement peut contenir tout gaz qu'il soit de nature neutre, oxydante, ou encore réductrice, comme cela est décrit dans le document antérieur précité (EP-516 804).

Différents renseignements concernant cette composition et le procédé de dépôt pourront être trouvés dans ce document.

On conçoit alors que l'unité de traitement d'informations intégrée dans le dispositif de commande selon l'invention permet de réguler d'une part, le débit de gaz d'alimentation du dispositif, d'autre part, l'énergie électrique appliquée à celui-ci et enfin, le débit d'aspiration de gaz, pour adapter ces paramètres de fonctionnement du dispositif, et les réguler en fonction de la vitesse de défilement du substrat dans le dispositif, ce qui permet de maintenir une qualité équivalente de traitement du substrat lors de son passage dans ce dispositif.

Ceci permet alors d'adapter les conditions de fonctionnement du dispositif de traitement aux conditions de fonctionnement de la ligne de transformation ou production dans laquelle est intégré un tel dispositif pour maintenir la productibilité du traitement.

La régulation de ces différents paramètres de contrôle du fonctionnement du dispositif de traitement se fait de manière classique par exemple à partir de programmes et de données stockés dans l'unité de traitement 10.

Les différentes informations nécessaires sont tout d'abord établies par analyse du fonctionnement du dispositif par exemple dans différentes conditions, ce qui permet ensuite d'établir les différentes relations liant les différents paramètres de contrôle du fonctionnement de ce dispositif, ces relations étant ensuite utilisées pour la régulation du fonctionnement de celui-ci.

On notera également que l'unité de traitement d'informations 10 peut être raccordée à un centre de contrôle/commande à distance du système de traitement, par l'intermédiaire de moyens de transmission d'informations, désignés par la référence générale 20 sur cette figure.

Ces moyens de transmission d'informations peuvent également présenter n'importe quelle structure appropriée permettant d'assurer un échange d'informations entre cette unité et le centre de contrôle/commande à distance.

Enfin, l'unité de traitement d'informations peut également être associée à une interface homme/machine comportant des moyens d'entrée de données 21 par exemple par un opérateur et des moyens d'affichage d'informations 22.

Cette unité de traitement d'informations 10 peut alors également comporter des moyens de simulation et/ou de modélisation du fonctionnement du dispositif de traitement 2, permettant à partir de paramètres (établis) d'entrée du dispositif, de déterminer un traitement estimé du substrat 3, en sortie du dispositif, ou encore à partir d'un traitement souhaité du substrat 3 en sortie du dispositif 2, de déterminer des paramètres d'entrée estimés de celui-ci.

Ces différents moyens peuvent par exemple être constitués par des programmes intégrés dans l'unité de traitement et établis par exemple expérimentalement pour assurer la simulation et/ou la modélisation voulues.

Les paramètres d'entrée de tels moyens de simulation et/ou de modélisation peuvent alors comporter un certain nombre d'éléments, parmi lesquels on peut citer :
- le type de substrat à traiter,
- la vitesse de défilement de celui-ci dans le dispositif de traitement,
- la puissance électrique délivrée par les moyens d'alimentation en énergie au dispositif de traitement,
- la composition d'atmosphère gazeuse,
- le débit d'alimentation en gaz,
- le débit d'aspiration de gaz,
- la nature ou la géométrie des électrodes générant la décharge électrique, ou
- les caractéristiques du signal électrique générant la décharge (fréquence, amplitude, forme du signal...).

Bien entendu, différents modes de réalisation des différents moyens qui viennent d'être décrits peuvent être envisagés.

De façon générale, la structure de ces moyens peut être classique en elle-même, la régulation du fonctionnement de ceux-ci par l'unité de traitement d'informations 10 se faisant par commande de ceux-ci par exemple en tension, en courant ou autre.

## Revendications

1. Dispositif de commande du fonctionnement d'un système de traitement de surface d'un substrat solide en défilement, par décharge électrique à barrière diélectrique dans une atmosphère gazeuse contrôlée, système du type comportant un dispositif de traitement (2) dans lequel défile le substrat à traiter (3), ce dispositif de traitement étant raccordé à des moyens (7) d'alimentation de celui-ci en gaz, à des moyens (8) d'alimentation de celui-ci en énergie électrique pour engendrer la décharge électrique, et à des moyens (9) d'aspiration de gaz, **caractérisé en ce qu'**il comporte une unité de traitement d'informations (10) apte à recevoir en entrée une information de vitesse de défilement du substrat dans le dispositif de traitement, et raccordée en sortie à des moyens de commande (14) des moyens d'alimentation en gaz (7) et à des moyens de commande (15) des moyens d'alimentation en énergie électrique (8), pour réguler le débit de gaz délivré par les ou chacun des moyens d'alimentation en gaz et/ou la puissance électrique délivrée par les moyens d'alimentation en énergie électrique, au dispositif, en fonction de la vitesse de défilement du substrat (3) dans le dispositif de traitement (2), afin d'obtenir un traitement de surface de qualité équivalente du substrat (3) quelle que soit la vitesse de défilement de celui-ci dans le dispositif de traitement.

2. Dispositif de commande selon la revendication 1, **caractérisé en ce que** l'unité de traitement d'informations (10) est reliée en sortie à des moyens de commande (18,19) du débit d'aspiration des moyens d'aspiration de gaz (9).

3. Dispositif de commande selon la revendication 2, **caractérisé en ce que** l'unité de traitement d'informations (10) est adaptée pour réguler le débit d'aspiration des moyens d'aspiration (9) en fonction du débit d'alimentation en gaz des moyens d'alimentation en gaz (7).

4. Dispositif de commande selon la revendication 2 ou 3, **caractérisé en ce que** les moyens d'aspiration comportent au moins des premiers moyens d'aspiration (16) disposés en entrée du dispositif de traitement et des seconds moyens d'aspiration (17) disposés en sortie du dispositif de traitement, et **en ce que** l'unité de traitement d'informations (10) est reliée en sortie à des moyens de commande (18,19) des débits d'aspiration des premiers et seconds moyens d'aspiration.

5. Dispositif de commande selon l'une quelconque des revendications précédentes, **caractérisé en ce que** l'unité de traitement d'informations (10) comporte en outre des moyens de simulation et/ou de modélisation du fonctionnement du dispositif de traitement (2), permettant, à partir de paramètres établis d'entrée du dispositif de traitement, de déterminer un traitement estimé du substrat (3) en sortie du dispositif (2), ou à partir d'un traitement souhaité du substrat (3) en sortie du dispositif (2), de déterminer des paramètres d'entrée estimés de celui-ci.

6. Dispositif de commande selon l'une quelconque des revendications précédentes, **caractérisé en ce que** l'unité de traitement d'informations (10) est raccordée à un centre de contrôle/commande à distance du système de traitement par l'intermédiaire de moyens de transmission d'informations (20).

7. Dispositif selon l'une quelconque des revendications précédentes, **caractérisé en ce que** l'unité de traitement d'informations (10) est reliée à au moins une interface homme/machine (21,22).

8. Dispositif selon l'une quelconque des revendications précédentes, **caractérisé en ce que** l'information de vitesse de défilement du substrat (3) dans le dispositif de traitement (2) est délivrée à l'unité de traitement d'informations (10) par un capteur de vitesse (13) associé à celui-ci ou à une ligne de production ou transformation de substrats dans laquelle le dispositif est intégré.

9. Procédé de commande du fonctionnement d'un système de traitement de surface d'un substrat solide en défilement, par décharge électrique à barrière diélectrique dans une atmosphère gazeuse , système du type comportant un dispositif de traitement (2) dans lequel défile le substrat à traiter (3), ce dispositif étant raccordé à des moyens (7) d'alimentation de celui-ci en gaz, à des moyens (8) d'alimentation de celui-ci en énergie électrique pour engendrer la décharge électrique, et à des moyens (9) d'aspiration de gaz, **caractérisé en ce qu'**il comporte la mise en oeuvre des étapes suivantes :
- on mesure la vitesse de défilement du substrat dans le dispositif de traitement;
- on commande, les moyens d'alimentation en gaz (7) et les moyens d'alimentation en énergie électrique (8), pour réguler le débit de gaz délivré par les ou chacun des moyens d'alimentation en gaz et/ou la puissance électrique délivrée par les moyens d'alimentation en énergie électrique, au dispositif, en fonction de la vitesse de défilement du substrat (3) dans le dispositif de traitement (2), afin d'obtenir un traitement de surface de qualité équivalente du substrat (3) quelle que soit la vitesse de défilement de celui-ci dans le dispositif de traitement.

10. Procédé de commande selon la revendication 9, **caractérisé en ce que** l'on commande en outre le débit d'aspiration des moyens d'aspiration (9).

11. Procédé de commande selon la revendication 10, **caractérisé en ce que** l'on régule le débit d'aspiration des moyens d'aspiration (9) en fonction du débit d'alimentation en gaz des moyens d'alimentation en gaz (7) du dispositif.

12. Procédé de commande selon la revendication 11, **caractérisé en ce que** les moyens d'aspiration comportent au moins des premiers moyens d'aspiration (16) disposés en entrée du dispositif de traitement et des seconds moyens d'aspiration (17) disposés en sortie du dispositif de traitement, et **en ce que** l'on régule les débits d'aspiration des premiers et seconds moyens d'aspiration.

13. Procédé de commande selon l'une des revendications 9 à 12, **caractérisé en ce que** l'on effectue des opérations de simulation et/ou de modélisation du fonctionnement du dispositif de traitement (2) permettant à partir de paramètres établis d'entrée du dispositif, de déterminer un traitement estimé du substrat (3) en sortie du dispositif (2), ou à partir d'un traitement souhaité du substrat (3) en sortie du dispositif (2), de déterminer des paramètres d'entrée estimés de celui-ci.

14. Procédé de commande selon la revendication 13, **caractérisé en ce que** les paramètres d'entrée des opérations de simulation/modélisation comprennent un ou plusieurs des membres de la liste suivante :
- le type de substrat à traiter,
- la vitesse de défilement de celui-ci dans le dispositif de traitement,
- la puissance délivrée par les moyens d'alimentation en énergie au dispositif de traitement,
- la composition d'atmosphère gazeuse, et
- le débit d'alimentation en gaz.

15. Procédé de commande selon l'une des revendications 9 à 14, **caractérisé en ce que** l'on contrôle à distance le système de traitement par l'intermédiaire de moyens de transmission d'informations (20).

## Patentansprüche

1. Vorrichtung zur Steuerung des Betriebs eines Systems zur Behandlung der Oberfläche eines ablaufenden, festen Substrats durch elektrische Entladung mit dielektrischer Grenzschicht in einer kontrollierten gasförmigen Atmosphäre, eines Systems von der Art, die eine Behandlungseinrichtung (2) umfasst, in der das zu behandelnde Substrat (3) abläuft, wobei die Behandlungseinrichtung an Mittel (7) zur Versorgung derselben mit Gas, an Mittel (8) zur Versorgung derselben mit elektrischer Energie, um die elektrische Entladung auszulösen, und an Mittel (9) zur Gasansaugung angeschlossen ist, **dadurch gekennzeichnet, dass** sie eine Informationsverarbeitungseinheit (10) umfasst, die in der Lage ist, am Eingang eine Information über die Ablaufgeschwindigkeit des Substrats in der Behandlungseinrichtung zu empfangen, und die am Ausgang mit Steuermitteln (14) für die Mittel (7) zur Gasversorgung und mit Steuermitteln (15) für die Mittel (8) zur Versorgung mit elektrischer Energie verbunden ist, um die von dem oder jedem der Mittel zur Gasversorgung an die Einrichtung gelieferte Gasmenge und/oder die elektrische Leistung, die von den Mitteln zur Versorgung mit elektrischer Energie geliefert wird, in Abhängigkeit von der Ablaufgeschwindigkeit des Substrats (3) in der Behandlungseinrichtung (2) zu regulieren, um eine Oberflächenbehandlung des Substrats (3) von gleichwertiger Qualität unabhängig von der Ablaufgeschwindigkeit desselben in der Behandlungseinrichtung zu erhalten.

2. Steuervorrichtung nach Anspruch 1, **dadurch gekennzeichnet, dass** die Informationsverarbeitungseinheit (10) am Ausgang mit Mitteln (18, 19) zur Steuerung der Ansaugmenge der Mittel (9) vzur Gasansaugung verbunden ist.

3. Steuervorrichtung nach Anspruch 2, **dadurch gekennzeichnet, dass** die Informationsverarbeitungseinheit (10) derart ausgeführt ist, dass sie die Ansaugmenge der Ansaugmittel (9) in Abhängigkeit von der Gasversorgungsmenge der Mittel (7) zur Gasversorgung reguliert.

4. Steuervorrichtung nach Anspruch 2 oder 3, **dadurch gekennzeichnet, dass** die Ansaugmittel mindestens erste Ansaugmittel (16), die am Eingang der Behandlungseinrichtung angeordnet sind, und zweite Ansaugmittel (17), die am Ausgang der Behandlungseinrichtung angeordnet sind, umfasst und die Informationsverarbeitungseinheit (10) am Ausgang mit Mitteln (18, 19) zur Steuerung der Ansaugmengen der ersten und zweiten Ansaugmittel verbunden ist.

5. Steuervorrichtung nach einem der vorhergehenden Ansprüche, **dadurch gekennzeichnet, dass** die Informationsverarbeitungseinheit (10) ferner Mittel zur Simulation und/oder Modellierung der Funktion der Behandlungseinrichtung (2) umfasst, die es ermöglichen, aus festgesetzten Eingangsparametern der Behandlungseinrichtung eine veranschlagte Behandlung des Substrats (3) am Ausgang der Einrichtung (2) zu bestimmen oder aus einer gewünschten Behandlung des Substrats (3) am Ausgang der Einrichtung (2) veranschlagte Eingangsparameter derselben zu bestimmen.

6. Steuervorrichtung nach einem der vorhergehenden Ansprüche, **dadurch gekennzeichnet, dass** die Informationsverarbeitungseinheit (10) über Informationsübertragungsmittel (20) an rein Kontroll- und Fernsteuerzentrum für das Behandlungssystem angeschlossen ist.

7. Vorrichtung nach einem der vorhergehenden Ansprüche, **dadurch gekennzeichnet, dass** die Informationsverarbeitungseinheit (10) mit mindestens einer Mensch/Maschine-Schnittstelle (21, 22) verbunden ist.

8. Vorrichtung nach einem der vorhergehenden Ansprüche, **dadurch gekennzeichnet, dass** die Information über die Ablaufgeschwindigkeit des Substrats (3) in der Behandlungseinrichtung (2) an die Informationsverarbeitungseinheit (10) durch einen Geschwindigkeitssensor (13), der mit dieser verbunden ist, oder an eine Produktions- oder Weiterverarbeitungsanlage für Substrate, in die die Vorrichtung eingebaut ist, geliefert wird.

9. Verfahren zur Steuerung des Betriebs eines Systems zur Behandlung der Oberfläche eines ablaufenden, festen Substrats durch elektrische Entladung mit dielektrischer Grenzschicht in einer gasförmigen Atmosphäre, eines Systems von der Art, die eine Behandlungseinrichtung (2) umfasst, in der das zu behandelnde Substrat (3) abläuft, wobei diese Einrichtung an Mittel (7) zur Versorgung derselben mit Gas, an Mittel (8) zur Versorgung derselben mit elektrischer Energie, um die elektrische Entladung auszulösen, und an Mittel (9) zur Gasansaugung angeschlossen ist, **dadurch gekennzeichnet, dass** es den Einsatz der folgenden Schritte umfasst:
- Messung der Ablaufgeschwindigkeit des Substrats in der Behandlungseinrichtung;
- Steuerung der Mittel (7) zur Gasversorgung und der Mittel (8) zur Versorgung mit elektrischer Energie, um die von den oder jedem der Mittel zur Gasversorgung an die Einrichtung gelieferte Gasmenge und/oder die elektrische Leistung, die von den Mitteln zur Versorgung mit elektrischer Energie an die Einrichtung geliefert wird, in Abhängigkeit von der Ablaufgeschwindigkeit des Substrats (3) in der Behandlungseinrichtung (2) zu regulieren, um eine Oberflächenbehandlung des Substrats (3) von gleichwertiger Qualität unabhängig von der Ablaufgeschwindigkeit desselben in der Behandlungseinrichtung zu erhalten.

10. Steuerungsverfahren nach Anspruch 9, **dadurch gekennzeichnet, dass** ferner die Ansaugmenge der Ansaugmittel (9) gesteuert wird.

11. Steuerungsverfahren nach Anspruch 10, **dadurch gekennzeichnet, dass** die Ansaugmenge der Ansaugmittel (9) in Abhängigkeit von der Gasversorgungsmenge der Mittel (7) zur Gasversorgung der Einrichtung reguliert wird.

12. Steuerungsverfahren nach Anspruch 11, **dadurch gekennzeichnet, dass** die Ansaugmittel mindestens erste Ansaugmittel (16), die am Eingang der Behandlungseinrichtung angeordnet sind, und zweite Ansaugmittel (17), die am Ausgang der Behandlungseinrichtung angeordnet sind, umfasst und die Ansaugmengen der ersten und zweiten Ansaugmittel reguliert werden.

13. Steuerungsverfahren nach einem der Ansprüche 9 bis 12, **dadurch gekennzeichnet, dass** Simulationsund/oder Modellierungsvorgänge der Funktion der Behandlungseinrichtung (2) durchgeführt werden, die es ermöglichen, aus festgesetzten Eingangsparametern der Vorrichtung eine veranschlagte Behandlung des Substrats (3) am Ausgang der Einrichtung (2) zu bestimmen oder aus einer gewünschten Behandlung des Substrats (3) am Ausgang der Einrichtung (2) veranschlagte Eingangsparameter derselben zu bestimmen.

14. Steuerungsverfahren nach Anspruch 13, **dadurch gekennzeichnet, dass** die Eingangsparameter der Simulations-/Modellierungsvorgänge einen oder mehrere Punkte der folgenden Liste umfassen:
- Art des zu behandelnden Substrats;
- Ablaufgeschwindigkeit desselben in der Behandlungseinrichtung;
- von den Mitteln zur Versorgung der Behandlungseinrichtung mit Energie gelieferte Leistung;
- Zusammensetzung der gasförmigen Atmosphäre; und
- Gasversorgungsmenge.

15. Steuerungsverfahren nach einem der Ansprüche 9 bis 14, **dadurch gekennzeichnet, dass** das Behandlungssystem über Informationsübertragungsmittel (20) ferngesteuert wird.

## Claims

1. Device for controlling the operation of a system for the surface treatment of a solid running substrate by dielectric barrier discharge in a controlled gaseous atmosphere, the said system being of the type comprising a treatment device (2) through which the substrate (3) to be treated runs, this treatment device being connected to means (7) for supplying it with gas, to means (8) for supplying it with electrical energy, in order to generate the electrical discharge, and to gas suction means (9), **characterized in that** it includes a data processing unit (10) which is capable of receiving, as input, a datum on the speed at which the substrate is running through the treatment device and is connected, on the output side, to means (14) for controlling the gas supply means (7) and to means (15) for controlling the electrical energy supply means (8), in order to regulate the flow of gas delivered by the or each of the gas supply means and/or the electrical power delivered by the electrical energy supply means to the device according to the speed at which the substrate (3) is running through the treatment device (2), so as to obtain a surface treatment of the substrate (3) of equivalent quality whatever the speed at which the latter is running through the treatment device.

2. Control device according to Claim 1, **characterized in that** the data processing unit (10) is connected on the output side to means (18, 19) for controlling the suction rate of the gas suction means (9).

3. Control device according to Claim 2, **characterized in that** the data processing unit (10) is suitable for regulating the suction rate of the suction means (9) according to the gas supply rate of the gas supply means (7).

4. Control device according to Claim 2 or 3, **characterized in that** the suction means include at least first suction means (16) placed on the input side of the treatment device and second suction means (17) placed on the output side of the treatment device and **in that** the data processing unit (10) is connected on the output side to means (18, 19) for controlling the suction rates of the first and second suction means.

5. Control device according to any one of the preceding claims, **characterized in that** the data processing unit (10) furthermore includes means for simulating and/or for modelling the operation of the treatment device (2), making it possible, on the basis of established input parameters of the treatment device, to determine an estimated treatment of the substrate (3) on the output side of the device (2) or, on the basis of a desired treatment of the substrate (3) on the output side of the device (2), to determine estimated input parameters of the latter.

6. Control device according to any one of the preceding claims, **characterized in that** the data processing unit (10) is connected to a centre for remotely monitoring/controlling the treatment system via data transmission means (20).

7. Device according to any one of the preceding claims, **characterized in that** the data processing unit (10) is connected to at least one man/machine interface (21, 22).

8. Device according to any one of the preceding claims, **characterized in that** datum on the speed at which the substrate (3) is running through the treatment device (2) is delivered to the data processing unit (10) by a speed sensor (13) associated with the said device or to a substrate production or conversion line into which the device is integrated.

9. Method of controlling the operation of a system for the surface treatment of a solid running substrate by dielectric barrier discharge in a gaseous atmosphere, the said system being of the type comprising a treatment device (2) through which the substrate (3) to be treated runs, this device being connected to means (7) for supplying it with gas, to means (8) for supplying it with electrical energy, in order to generate the electrical discharge, and to gas suction means (9), **characterized in that** it comprises the execution of the following steps:
- the speed at which the substrate is running through the treatment device is measured;
- the gas supply means (11) and the electrical energy supply means (8) are controlled in order to regulate the flow of gas delivered by the or each of the gas supply means and/or the electrical power delivered by the electrical energy supply means to the device according to the speed at which the substrate (3) is running through the treatment device (2), so as to obtain a surface treatment of the substrate (3) of equivalent quality whatever the speed at which the latter is running through the treatment device.

10. Control method according to Claim 9, **characterized in that** the suction rate of the suction means (9) is furthermore controlled.

11. Control method according to Claim 10, **characterized in that** the suction rate of the suction means (9) is regulated according to the gas supply rate of the means (11) for supplying the device with gas.

12. Control method according to Claim 11, **characterized in that** the suction means include at least first suction means (16) placed on the input side of the treatment device and second suction means (17) placed on the output side of the treatment device and **in that** the suction rates of the first and second suction means are regulated.

13. Control method according to one of Claims 9 to 12, **characterized in that** operations of simulating and/or of modelling the operation of the treatment device (2) are carried out, making it possible, on the basis of established input parameters of the device, to determine an estimated treatment of the substrate (3) on the output side of the device (2) or, on the basis of a desired treatment of the substrate (3) on the output side of the device (2), to determine estimated input parameters of the latter.

14. Control method according to Claim 13, **characterized in that** the input parameters for the simulation/modelling operations comprise one or more members of the following list:
- the type of substrate to be treated;
- the rate at which the latter is running through the treatment device;
- the power delivered by the energy supply means to the treatment device;
- the composition of the gaseous atmosphere; and
- the gas supply rate.

15. Control method according to one of Claims 9 to 14, **characterized in that** the treatment system is remotely monitored via data transmission means (20).
